# EUROPEAN PATENT APPLICATION

(11) **EP 4 678 426 A1**
(43) Date of publication of application: **14.01.2026**
(21) Application number: 24187684.6
(22) Date of filing: 10.07.2024
(51) Int. Cl.: B60D 1/14, B60D 1/155

(54) **DRAWBAR FOR TRAILER WITH NUTPLATE**

(71) Applicant: VBG Group AB (Publ), 461 34 Trollhättan (SE)
(72) Inventor: Lysén, Robin, 464 93 Mellerud (SE); FORSDAHL, Gustav, 462 94 Frändefors (SE); Bellman, Maria, 461 59 Trollhättan (SE); KALLIOKORPI, Miso, 462 41 Vänersborg (SE)
(74) Representative: Lind Edlund Kenamets Intellectual Property AB

(57) **Abstract**

The present disclosure relates to a drawbar (2), a drawbar arrangement and a method (600) for manufacturing a drawbar. The drawbar (2) comprises a main profile (21) comprising a first side surface (211) and an opposite second side (212) surface wherein the first side surface (211) comprises at least two first profile holes (251) forming a first profile hole configuration. The drawbar (2) further comprises a first plate nut (4a) comprising first threaded holes (41) forming a first plate nut hole configuration matching the first profile hole configuration, wherein the first plate nut (4a) is arranged on an inner side (211a) of the first side surface (211) such that the first plate nut hole configuration matches the first profile hole configuration wherein the first threaded holes are configured to be engaged by a respective threaded fixation element (26, 26a-d) extending through a respective first profile hole (251).

## Description

### TECHNICAL FIELD OF THE INVENTION

The present invention relates to the field of trailers, and more particularly to a drawbar for a trailer or dolly, a trailer or dolly comprising said drawbar, and a method for manufacturing the drawbar.

### BACKGROUND

To enable connection of a trailer to a towing vehicle, trailers are often provided with drawbars extending from the trailer along a principal towing direction. The drawbar may in turn be equipped with a coupling feature, such as a hook, loop, ball or receptacle for connecting to an associated coupling feature on the towing vehicle.

Additionally, to make the drawbars more versatile, and e.g. allow connection to the towing vehicle even when the trailer is loaded with cargo of vazrying dimensions, the drawbars may be made telescopic. Telescopic drawbars comprise an outer housing reliantly attached to the trailer chassis and a telescopic member slidably arranged inside the outer housing. The telescopic member may be locked to the outer housing in a plurality of positions allowing the total length of the drawbar to be telescopically adjusted as desired, depending on the type of trailer, the type of cargo and the type of towing vehicle. Hereby, telescopic drawbars make trailer logistics much more efficient since the same trailer may be used in a larger variety of situations.

Since a drawbar is the primary link between a towing vehicle (e.g. a tractor) and a trailer (which may have a weight exceeding 40 metric tons) it must be purposely designed to withstand the high levels mechanical stress brought by e.g. the towing vehicle accelerating, breaking, and turning, vibrations and environmental factors. Notably, it is important that the outer housing of telescopic drawbars is reliantly attached to the trailer chassis and designed to transfer the forces acting on the telescopic member to the trailer chassis.

In some telescopic drawbars on the market today, the outer housing is formed as an elongated U-shaped profile. By arranging the U-shaped profile underneath a structure of the trailer, with the open end facing upwards towards the trailer structure, and attaching the U-shaped profile to the trailer using vertically arranged bolts a space is formed between the trailer structure and the U-shaped profile. Inside this space an inner profile can be arranged, which can slide relative the U-shape to realize a telescopic drawbar. By adapting the number and positioning of the vertically arranged bolts it is possible to distribute the loads somewhat uniformly.

However, a drawback with this type of outer housing is that the load distribution is sub-optimal. Additionally, the U-shaped outer housing with horizontal mounting flanges is a large and heavy construction which adds to the size and weight of trailers

### SUMMARY OF THE INVENTION

It is a purpose of the present invention to provide a new drawbar for a trailer or dolly (for pulling a trailer) which has better load distribution while at the same time being more compact.

According to a first aspect of the invention there is provided a drawbar for a trailer or dolly. The drawbar comprises a hollow elongated main profile, configured to be arranged substantially parallel to a principal towing direction of the trailer/dolly for pulling the trailer/dolly. The hollow elongated main profile comprising a first side surface and an opposite second side surface, extending over at least a portion of a longitudinal extension of the hollow elongated main profile, wherein the first side surface comprises at least two first profile holes forming a first profile hole configuration. The drawbar further comprises a first plate nut comprising first threaded holes forming a first plate nut hole configuration matching the first profile hole configuration, wherein the first plate nut is arranged on an inner side of the first side surface such that the first plate nut hole configuration matches the first profile hole configuration. Wherein each of the first threaded holes are configured to be engaged by a respective threaded fixation element extending through an associated one of the at least two first profile holes.

The drawbar may be designed for and hence suitable for a center-axle trailer. The drawbar may be used with different types of trailers. For example, the drawbar is a rigid drawbar, rigidly attached directly to a trailer. As another example, the drawbar is mounted on a dolly which is configured to be rotatably coupled to a trailer. As yet another example, the drawbar is used as a pivoting drawbar for a trailer, wherein the drawbar is pivotably coupled directly to a trailer.

The present invention is based on the realization that by providing a first plate nut having a first plate nut hole configuration matching the first profile hole configuration threaded engagement may be realized for each profile hole in a space efficient manner which is easy to realize during manufacturing. In general, the process of forming threaded holes directly in the main profile is time consuming and labor intensive and by providing the threaded holes on a plate nut, which may be arranged on the inside of the main profile, it becomes possible provide the possibility of threaded engagement at a plurality of profile holes by simply arranging the plate nut against the inner side of the first side surface.

A further advantage is that the first plate nut may be replaced if the threaded holes are worn out. In general it is very difficult to replace threads provided directly in the main profile.

Compared to a solution where individual nuts are arranged at each main profile opening the plate nut is much easier to retain during engagement of the threaded fixation element. Especially since drawbars may be several meters long it is generally difficult to access the inside of the main profile to hold a nut at each main profile opening during engagement with the threaded fixation elements.

Additionally, compared to a U-shaped outer profile which is attached to a trailer chassis or dolly using vertically threaded fixation elements (e.g. bolts), the drawbar of the present invention allows the threaded fixation elements to be oriented horizontally which provides for a better load distribution and a generally stronger attachment.

In some implementations, the first plate nut is integrally formed.

For example, the first plate nut is made from a single piece of metal.

Alternatively, the first plate nut comprises a plate, the plate comprising plate holes corresponding to the first plate nut hole configuration, and a threaded member fixed to the plate at each plate hole and each threaded member being aligned with an associated plate hole, wherein each threaded member is configured to be engaged by a respective threaded fixation element.

Hereby the plate nut may be made from an aggregate of multiple parts, such as a plate to which multiple threaded elements have been permanently attached using welding or press mounting. This type of plate nut is well suited for mass production and the type of nuts may be selected to fit the desired size and type of threaded fixation element.

In some implementations, each threaded member is arranged on an inside of the plate.

The inside of the plate faces away from the first side surface when the plate is arranged against the inside of the first side surface. The threaded fixation element will pass through the plate hole (as well as the associated profile hole) and then engage the threaded member whereby the outside of the plate (which is opposite to the inside of the plate) will be in direct abutment with the inside of the first side surface. This will contribute to keeping the pressure on the plate more uniform and avoid increased strain on the plate nut.

In some implementations, each threaded member is a press-mounted nut. Nuts are readily available and well suited for press-mounting. The plate nut may be realized from a sheet metal and provided with non-threaded plate holes whereby a nut is press-mounted to each plate hole. Alternatively to press-mounting it is envisaged that the nuts are mounted using an adhesive or using welding, at each plate hole.

In some implementations, the at least two first profile holes are separated along the longitudinal extension of the hollow elongated main profile and/or along a direction transverse to the longitudinal extension of the hollow elongated main profile.

By separating the profile holes along the longitudinal extension of the main profile or along a direction transverse to the longitudinal extension the threaded fixation elements may be installed spread over a greater area, which will facilitate force distribution and/or may make it possible to use a larger number of threaded fixation elements to attach the main profile to an auxiliary element. It is envisaged that not all profile holes must be used to attach the main profile to an auxiliary element. For example, a large number of profile holes may be provided in a pattern allowing the main profile to be attached to different types of auxiliary elements, using different subsets of the profile holes.

In some implementations, the first profile hole configuration comprises at least three first profile holes distributed along the longitudinal extension of the hollow elongated main profile, wherein two first profile holes are arranged in a first portion of the hollow elongated main profile and wherein at least one first profile hole is arranged in a second portion of the hollow elongated main profile, the second portion being located distally beyond the first portion along the longitudinal extension relative an open end of the hollow elongated main profile.

With this pattern of profile holes, and a plate nut having a matching plate nut hole configuration, the plate nut becomes very easy to mount to the main profile. Since the main profile may be very long it is generally challenging to access some parts of its interior, but with this arrangement of the profile holes at least two holes are arranged closer to the open end of the main profile allowing the plate nut to be correctly aligned and mounted using threaded fixation elements by only accessing the first portion. Two threaded fixation elements are sufficient to fully align the plate nut whereby the plate nut reaches further into the second portion of main profile and allows at least one threaded fixation element to be installed also through the second profile hole in the otherwise more inaccessible second portion of the main profile.

It is understood that depending on the type and size of the drawbar, and the application, the dimensions of the main profile may vary greatly. However with profile openings in both the first and second portion, the plate nut may easily be aligned with the profile hole configuration by an installer while fastening threaded fixation elements in the first portion of the main profile. After the plate nut has been fixated in the first portion the at least one threaded hole in the second portion is aligned with a profile hole, allowing threaded fixation elements (e.g. for retaining an auxiliary element to be fastened in the second portion) to be fixated. Accordingly, the plate nut may facilitate fastening of threaded fixation elements in inaccessible portions of the main profile, without directly accessing the inside of the main profile in these portions. Of course, the above mentioned distances are merely exemplary and other distances could be used.

In some implementations, the hollow elongated main profile has a substantially rectangular cross-section and is formed by being bent from sheet metal.

An advantage of forming the main profile from bent sheet metal is that the main profile may be formed in a cost-effective manner with a well-controlled thickness and hence strength. Further, well-established manufacturing techniques generally requiring few manufacturing steps may be utilized. The main profile may be formed from a single piece of sheet metal. Other components mentioned in the present disclosure, such as the optional inner profile, reinforcing bracket or attachment arrangement may also be formed from bent sheet metal.

Furthermore, it is noted that the rectangular cross-sectional shape is merely exemplary, and that main profiles of other shapes (e.g. polygonal) may be used.

Additionally or alternatively, it is envisaged that the main profile is made from multiple parts, held together by bolts, rivets or welding. One or more of the multiple parts may in turn be realized using bent sheet metal.

In some implementations, the first plate nut comprises a recess and/or protrusions configured to receive and support a slide block.

A slide block may be arranged between the main profile and an inner profile configured telescopically slide relative to the main profile. The slide block is configured to reduce friction while sliding inner profile relative to main profile. The slide block hereby reduces wear of the inner profile and main profile. The person skilled in the art will appreciate that the slide block may be realized using different types of materials, such as a polymer material and/or a metal material. For example, the slide block is formed of or comprises PTFE, is formed of or comprises polyaramid (nylon) and/or is formed of or comprises a metal. When the slide block is made of a metal, the metal of the slide block is preferably less hard than the metal of the inner profile, such that the slide block is worn out at a more rapid rate compared to the inner profile.

The plate nut hereby not only makes it possible to attach the main profile to auxiliary elements, it may also double as an element for retaining a slide block between the main profile and an inner profile.

In some implementations, the drawbar further comprises an inner profile slidingly arranged inside the hollow elongated main profile, such that a length of the drawbar is adjustable, wherein the inner profile is configured to be locked in at least two positions relative the hollow elongated main profile and wherein an end portion of the inner profile comprises a coupling arrangement configured to be connected to a towing vehicle, such as a truck.

Accordingly, the drawbar is telescopic, and its length may be adjusted by sliding the inner profile in or out of the main profile and locking it to the main profile. The main profile may hereby act as a guiding profile, guiding the telescopic movement of the inner profile. The plate nut is thin, and placed between the inner profile and main profile, so as to not prohibit the inner profile from sliding relative to the main profile. The plate nut may also be configured to not interfere with a locking mechanism used to lock the inner profile relative to the main profile. For example, the locking mechanism may be a pin mechanism where a locking pin is inserted through an aperture in the main profile and into an aperture of the inner profile whereby the plate nut comprises an aperture matching the aperture in the main profile, or the plate nut is of shape which circumvents the aperture, so as to not obstruct the locking pin.

In some implementations, the second side surface of the main profile comprises at least two second profile holes forming a second profile hole configuration. The drawbar further comprising a second plate nut comprising second threaded holes forming a second plate nut hole configuration matching the second profile hole configuration. Wherein the second plate nut is arranged on an inner side of the second side surface such that the second plate nut hole configuration matches the second profile hole configuration and wherein each of the second threaded holes are configured to be engaged by a respective threaded fixation element extending through an associated one of the at least two second profile holes.

A second plate nut may accordingly be arranged on the inner side of the second side surface whereby fixation using threaded fixation elements is enabled on both the first and second side surface allowing the main profile to be reliantly attached to an auxiliary element at both side surfaces.

In general two or more plate nuts may be arranged on the inner side of one or both of the first and second side surface to facilitate even better load distribution and or provide additional threaded holes allowing a larger number of threaded fixation elements to be used to attach the main profile to an auxiliary element.

According to a second aspect of the invention there is provided a drawbar arrangement comprising the drawbar according to the first aspect, at least two threaded fixation elements, such as screws or bolts, and an auxiliary element comprising auxiliary element holes forming an auxiliary element hole configuration matching the first profile hole configuration. Wherein the at least two threaded fixation elements fixate the auxiliary element in relation to the hollow elongated main profile by threadedly engaging a respective one of the first threaded holes via an associated one of the first profile holes and an associated one of the auxiliary element holes.

For example, the auxiliary element is included in an attachment arrangement for connecting to a chassis frame of a trailer or dolly, or to a reinforcing bracket for reinforcing at least a portion of the hollow elongated main profile.

According to a third aspect of the invention there is provided a trailer or a dolly comprising a drawbar arrangement according to the second aspect.

In general, features of the second and third aspect provide similar advantages as discussed above in relation to the first aspect. Consequently, said advantages will not be repeated in order to avoid undue repetition.

According to a fourth aspect of the invention there is provided a method for manufacturing a drawbar arrangement, by mounting an auxiliary element to a drawbar according to the first aspect. The method comprises arranging an auxiliary element comprising auxiliary element holes forming an auxiliary element hole configuration matching the first profile hole configuration such that the auxiliary element hole configuration aligns with the main profile hole configuration, and threadedly engaging at least two threaded fixation elements with a respective first threaded hole via an associated one of the first profile holes and an associated one of the auxiliary element holes, thereby fixing the auxiliary element in relation to the hollow elongated main profile.

In general, features of this fourth provide similar advantages as discussed above in relation to the first through third aspect. Consequently, said advantages will not be repeated in order to avoid undue repetition.

A further scope of applicability of the present invention will become apparent from the detailed description given below. However, it should be understood that the detailed description and specific examples, while indicating preferred embodiments of the invention, are given by way of illustration only, since various changes and modifications within the scope of the invention will become apparent to those skilled in the art from this detailed description.

Hence, it is to be understood that this invention is not limited to the particular component parts of the device described as such device may vary. It is also to be understood that the terminology used herein is for the purpose of describing particular embodiments only and is not intended to be limiting. It must be noted that, as used in the specification and the appended claim, the articles "a," "an," "the," and "said" are intended to mean that there are one or more of the elements unless the context clearly dictates otherwise. Thus, for example, reference to "a unit" or "the unit" may include several devices, and the like. Furthermore, the words "comprising", "including", "containing" and similar wordings do not exclude other elements or steps.

Thus, throughout this specification, unless the context requires otherwise, the word "comprise" or variations such as "comprises" or "comprising", will be understood to imply the inclusion of a stated integer or group of integers but not the exclusion of any other integer or group of integers.

### BRIEF DESCRIPTION OF THE DRAWINGS

The above and other aspects of the present inventive concept will now be described in more detail, with reference to appended figures showing embodiments or variants of the inventive concept. The figures should not be considered limiting, instead, they are used for explaining and understanding.

As illustrated in the figures, the sizes of details, layers and regions may be exaggerated for illustrative purposes and, thus, are provided to illustrate the general structures of variants. Like reference numerals refer to like elements throughout.
Figure 1 shows a perspective view of a trailer with a drawbar.
Figure 2 shows a perspective view of a telescopic drawbar, attached to an attachment arrangement configured to be mounted to a trailer chassis.
Figure 3 shows a perspective view of an alternative non-telescopic drawbar, attached to an attachment arrangement configured to be mounted to a trailer chassis.
Figure 4 is a close-up view of the attachment between the hollow elongated main profile of a drawbar and the attachment arrangement.
Figure 5 shows a perspective view of a plate nut provided a plurality of press-mounted nuts, according to some embodiments.
Figure 6 shows two plate nuts mounted to an inner side of the first side surface of the hollow elongated main profile.
Figure 7a is a cross-sectional view of the main profile with two plate nuts arranged on opposite inner sides of the main profile.
Figure 7b is a cross-sectional view of the main profile with four plate nuts, wherein two plate nuts are arranged on each opposite inner side of main profile.
Figure 7c is a cross-sectional view of the main profile with four plate nuts mounted using threaded fixation elements.
Figure 8 shows a plate nut provided with a recess for holding a slide block.
Figure 9a - 9g are schematic cross-sectional views of main profiles of alternative designs, realized as an aggregate of multiple pieces or using a single piece.
Figure 10 is a flowchart of a method for manufacturing a drawbar arrangement.
Figure 11a -11c show different types of trailers for which the drawbar may be used.

### DETEAILED DESCRIPTION

The present inventive concept will now be described more fully hereinafter with reference to the accompanying drawings, in which currently preferred variants or embodiments of the inventive concept are shown. This inventive concept may, however, be implemented in many different forms and should not be construed as limited to the variants set forth herein; rather, these variants are provided for thoroughness and completeness, and fully convey the scope of the present inventive concept to the skilled person.

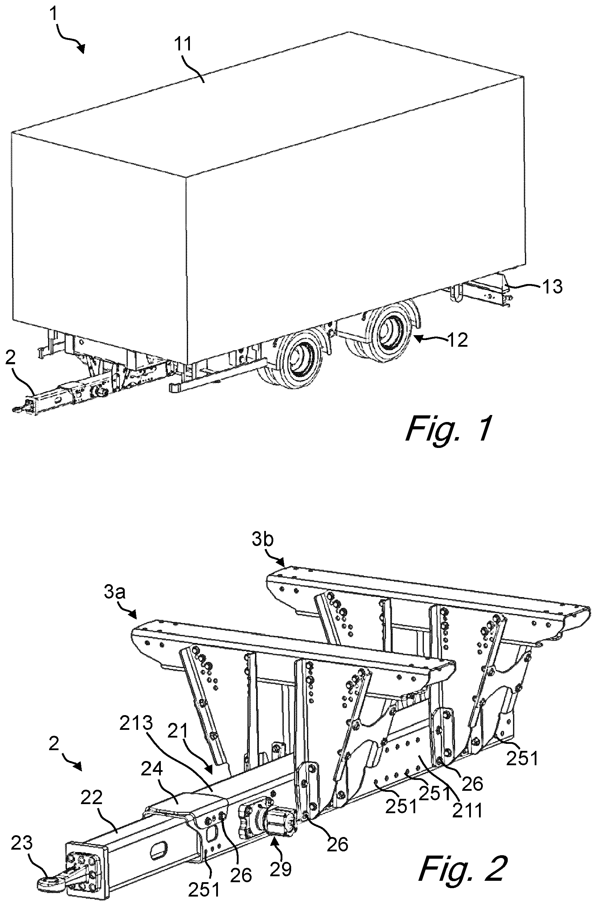

Fig. 1 shows a perspective view of a trailer 1, and more specifically a truck trailer. The trailer 1 has a trailer chassis onto which other components of the trailer 1 may be mounted. For example, the trailer 1 may comprise a platform for carrying cargo, one or more wheel axels 12 mounted to the trailer chassis, a rearguard 13 provided with e.g. lights, reflexes and/or a transverse, rear mounted, bar for underride protection. As is well known in the art, the platform may be provided with a housing for carrying loose goods or the cargo 11 may be in the form of a shipping container placed on the platform. Also, the platform may be provided with other types of retention means for specifically adapted for the type of cargo 11 (e.g. timber, coiled goods such as cables or pipes and vehicles).

Also attached to the chassis of the trailer 1 is a drawbar 2 according to the present invention. The drawbar 2 is generally elongated and extends parallel to a principal towing direction of the trailer 1 to enable pulling of the trailer 1 being a towing vehicle Advantageously, the drawbar 2 extends beyond the cargo 11 in along the principal towing direction e.g. to make easier to connect the drawbar to a towing vehicle.

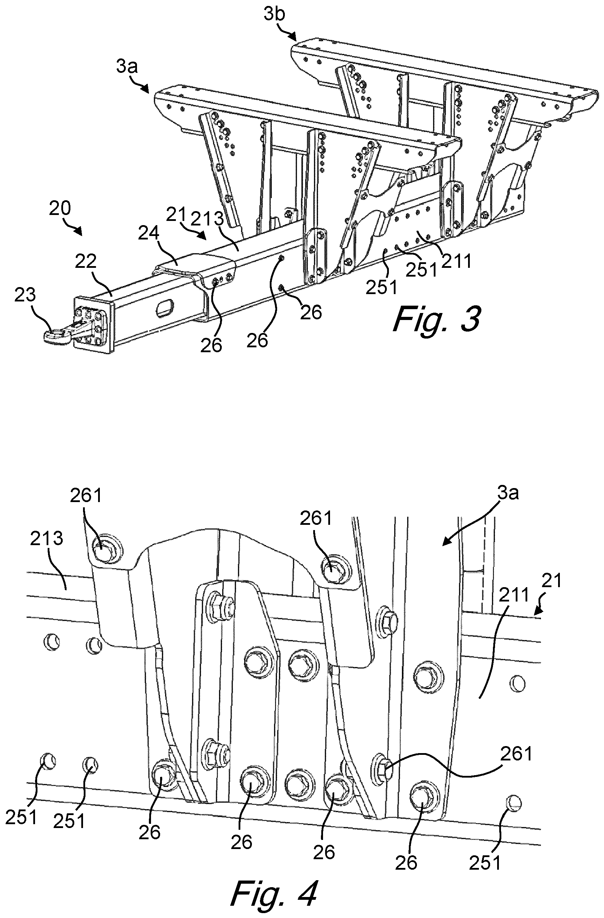

Fig. 2 shows a perspective view of a telescopic drawbar 2 according to some embodiments, after it has been removed from the trailer chassis. While there are advantages with a telescopic drawbar in terms of e.g. versatility and adaptability for various types of towing vehicles or types of cargo, it is noted that the drawbar 2 may also be non-telescopic, as described in connection with Fig. 3.

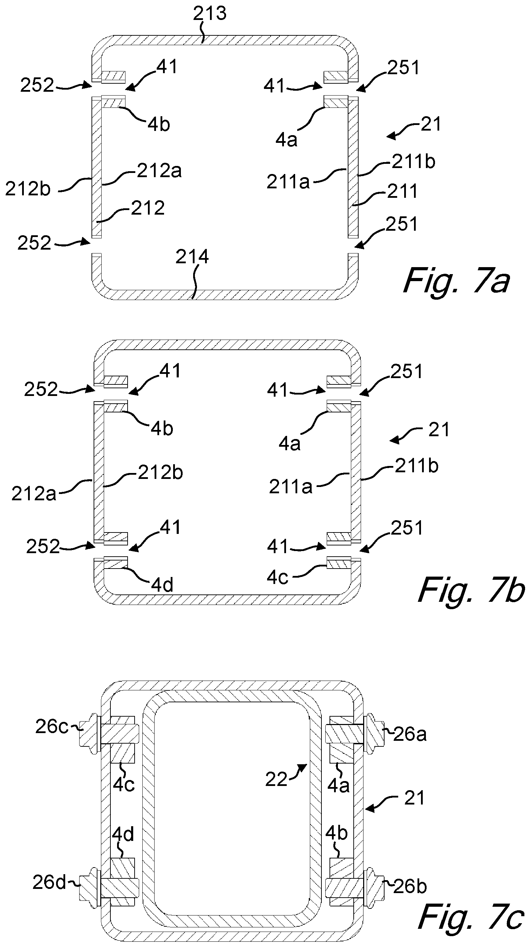

The telescopic drawbar 2 comprises a hollow elongated main profile 21 (also referred to simply as the "main profile") configured to be arranged substantially parallel to the principal towing direction of the trailer. The main profile 21 of this embodiment has a substantially rectangular cross-section (see Figs. 7a-c) but this is merely exemplary, and other cross-sectional shapes are envisaged, such as hexagonal or generally polygonal, with sharp or smooth edges. The main profile 21 extends along a longitudinal extension axis substantially parallel with the principal towing direction.

The main profile 21 comprises a first side surface 211, a second opposite side surface (not seen), and a top surface 213 as well as bottom surface (not seen) connecting the first side surface 211 and the second side surface. While the terms "side", "top" and "bottom" are used to describe the features of the main profile as it traditionally is oriented it is envisaged that the main profile 21 may be reoriented in some applications.

The main profile 21 further comprises at least two first profile holes 251 extending through the first side surface 211 of the main profile 21. The first side surface 211 of this embodiment faces primarily the horizontal direction when the main profile 21 is mounted on a trailer (or a dolly). The first profile holes 251 form a pattern referred to as first a profile hole configuration. The at least two first profile holes 251 may be separated along the longitudinal extension axis and/or separated in a direction transverse to the longitudinal extension axis. As seen in Fig. 2, the first side surface 211 comprises two rows of first profile holes 251 wherein the first profile holes 251 of each row are separated along the longitudinal extension axis and the two rows as such are separated from each other along the transverse direction.

Although not seen in Fig. 2, it is envisaged that the second side surface comprises a plurality of second profile holes forming a second profile hole configuration. The first and second profile hole configurations may be similar or even identical to each other, however it is of course possible that the first and second profile hole configurations are different. In the following, the features and functions of the first profile holes 251 and their interaction with a plate nut and/or auxiliary element will be described but it is understood that the same applies analogously to the second profile holes provided through the second side surface.

Using the two or more first profile holes 251 it is possible to mount the main profile 21 against an auxiliary element. The auxiliary element may e.g. be a reinforcement bracket 24 configured to reinforce an open end of the main profile and/or the auxiliary element is part of an attachment arrangement 3a, 3b which in turn is configured to be connected to the chassis frame of the trailer (or a dolly). The attachment arrangement 3a, 3b of this exemplary embodiment comprises two sub-arrangements, a front attachment arrangement 3a and a rear attachment arrangement 3b wherein the front attachment arrangement 3a is arranged in front of the rear attachment arrangement along the principal direction of travel, when the drawbar 2 is pulled by a towing vehicle. However, it is understood that this attachment arrangement 3a, 3b is merely exemplary and that other types of attachment arrangements configured to allow connection between the first profile holes 251 provided in the first side surface 211 and the chassis frame may be used.

The first profile holes 251 are advantageously simple through-going openings formed by e.g. a stamping or drilling process or similar. Hereby, the first (and second) profile holes 251 may be non-threaded.

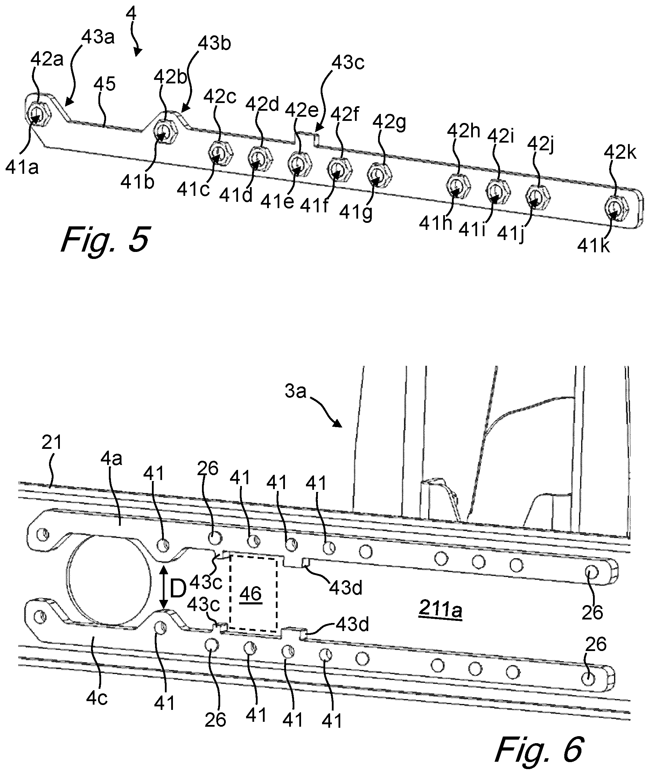

To enable the main profile 21 to be attached to the auxiliary element (e.g. the reinforcing bracket 24 or the attachment arrangement 3a, 3b) using threaded fixation elements (such as bolts or screws) threaded holes are instead provided in a first plate nut that is separate from the main profile 21 and arranged on the inside of the first side surface 211 as described in connection with Figs. 5 and 6 below. Additionally, a second plate nut may be arranged on the inner side of the second side surface to provide the possibility of threaded engagement also against the second side surface of the main profile 21.

The first (and optionally second) plate nut comprise a plurality of threaded holes forming a threaded hole configuration which matches the profile hole configuration.

By providing a first (and optionally second) plate nut and arranging the plate nut on the inner side of the main profile 21 it is possible to prepare the main profile 21 for threaded engagement without providing threads directly in the profile holes 251 of the main profile 21. There are numerous benefits with this design.

Firstly, the main profile 21 is generally a large and heavy component meaning that it is difficult and labor intensive work to provide multiple individual threaded holes directly in the main profile 21. Secondly, as the threads are exposed to mechanical stress, age or may otherwise degrade over time it is comparatively easy to replace the plate nut with a new plate nut compared to replacing threads provided directly in the main profile 21.

Furthermore, the first plate nut may easily be attached to the main profile 21 using one or more threaded fixation elements going through an associated first profile hole 251. When the first plate nut is attached, one or more further threaded holes may remain free and in communication with further first profile holes 251 meaning the main profile 21 may be e.g. shipped or stored with the plate nut already reliantly attached to the inside such that the main profile 21 is ready for direct attachment to an auxiliary element.

To make the drawbar 2 telescopic, the coupling arrangement 23 (here in the form of a loop connector) is attached to an inner profile 22 which is configured to slidably fit inside the main profile 21. The main profile 21 has an open end allowing the inner profile 22 to be inserted and extend telescopically beyond the reach of the main profile 21.

Hereby, the longitudinal positioning of the coupling arrangement 23 relative to the trailer or dolly is adjustable by sliding the inner profile 22 in or out of the main profile 21. A locking arrangement is provided to allow locking the inner profile 22 relative to the main profile 21 in two or more positions. The locking arrangement may e.g. be realized with at least two apertures formed in the inner profile 22 and at least one aperture formed in the main profile 21 whereby a pin may be inserted through the aperture of both profiles when two apertures align, to lock of the inner profile 22 relative to the outer profile 21. The locking pin may be withdrawn and inserted manually or automatically, e.g. using a pin actuator 29 arranged over the aperture in the main profile 22 as shown in Fig. 2.

Fig. 3 shows an exemplary non-telescopic drawbar 20. The main profile 21 of the non-telescopic drawbar 20 also comprises two or more first profile holes 251 arranged in the first side surface 211 configured to allow threaded fixation elements 26 to pass therethrough so as to threadedly engage the threaded holes of the first plate nut arranged on the inner side of the first side surface 211 the main profile 21 on the one hand and engage the auxiliary element on the other hand.

A difference between the telescopic drawbar 2 and the non-telescopic drawbar 20 is that the inner profile 22 carrying the coupling arrangement 23 may be attached directly to the main profile 21 using e.g. a bolt or pin as seen in Fig. 3. Alternatively, it is envisaged that the inner profile 22 may be omitted entirely whereby the coupling arrangement 23 is mounted directly to the main profile 21.

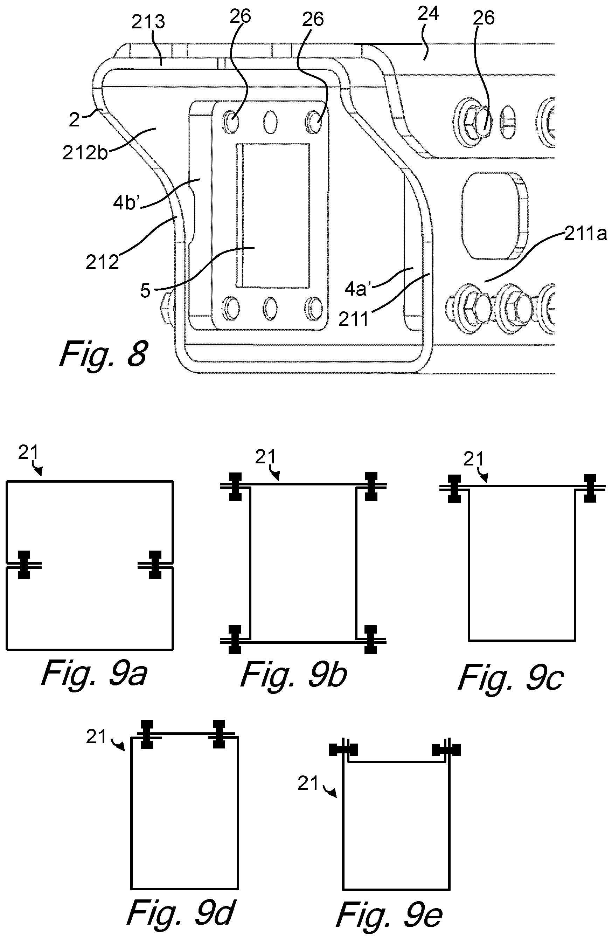

The main profile 21 and/or the inner profile 22 may be formed by being bent from sheet metal. Hereby, the main profile 21 and/or the inner profile 22 may be manufactured in an efficient manufacturing process with very little waste. Alternatively, the main profile 21 and/or the inner profile 22 may be made from multiple pieces which are attached together by means of e.g. bolts, rivets or welding. Examples of main profiles made from multiple pieces are described in connection to Figs. 9a-9e.

Fig. 4 shows a closeup view of an attachment arrangement 3a being connected to the main profile 21. The first side surface 211 of the main profile 21 has a plurality of profile holes 251 forming a profile hole configuration. The profile holes 251 as such are not threaded and to make it possible to attach the attachment arrangement 3a a plate nut, having threaded holes arranged in a plate nut hole configuration matching the profile hole configuration, is arranged against the inner side of the first side surface 211 of the main profile 21. More specifically, the plate nut is arranged such that the plate nut hole configuration matches the profile hole configuration whereby threaded elements 26 (such as a bolts) may be inserted with the tail first, through a respective hole in attachment arrangement 3a, through an associated profile hole 251 and into threaded engagement with an associated threaded hole of the plate nut in the inside of the first side surface 211. By tightening each threaded element the main profile 21 will be reliantly held against the attachment arrangement 3a.

Of course, the attachment element 3a may comprise additional openings and threaded elements 261 holding together the attachment element 3a which do not participate directly in the attachment between the main profile 21 and the attachment arrangement 3a. Similarly, it is noted that the main profile 21 and/or the plate nut may comprise one or more profile holes/threaded holes which are not a part of the plate nut hole configuration and/or the profile hole configuration. For example, as described above, the main profile may have an aperture for enabling locking of the inner profile 22 relative the main profile 21 and this aperture does not necessarily match a threaded hole of the plate nut.

In general, the profile hole configuration and the plate nut hole configuration comprise two or more matching holes but each of the main profile 21 and plate nut may comprise a larger number of total holes meaning that some holes do not participate in the matching hole configurations. For example, it is envisaged that the plate nut is provided with a plurality of threaded holes wherein a first subset of the threaded holes match a subset of the profile holes 251 in a first position and wherein the first subset, or a different second subset, of the threaded holes match the profile holes when the plate nut is arranged in a second different position. Hereby, it is envisaged that the plate nut may be realized with an excess of threaded holes, to allow the plate nut to be used in different positions and/or to match different profile hole configurations. The opposite is also envisaged, where the main profile 21 is realized with an excess of profile holes 251, to allow the plate nut to be used in different positions.

Fig. 5 shows an exemplary plate nut 4 comprising a plurality of threaded holes 41a-k. The plate nut 4 comprises a plate 45 and the plurality of threaded holes 41a-k are provided on the plate 45.

The plate nut 4 may be formed by providing the threaded holes 41a-k directly in or through the plate 45. For example, to form a threaded hole 41a-k an opening is first formed in the plate 45 by drilling or stamping whereby threads are formed in the opening or the threads are formed at the same time as the hole.

Alternatively, each threaded hole 41a-41k is formed by forming a non-threaded hole in the plate 45 and subsequently attaching a threaded element 42a-42k (such as a nut) to the plate 45 such that the threaded element 42a-42k communicates with the opening. Each threaded element 42a-42k may e.g. be a nut attached to the plate 45 by e.g. welding, using an adhesive or press-mounting.

The plate 45 may be substantially flat, rectangular and elongated as shown in Fig. 5. Of course, other shapes are also possible (see e.g. Fig. 8) being provided with two or more, three or more or even four or more threaded holes 41a-k. The exemplary plate nut 4 of Fig. 5 comprises eleven threaded holes 41a-k.

Advantageously, the plate nut 4 is elongated along the longitudinal direction and comprises a plurality of threaded holes 41a-k distributed along the longitudinal direction. With this type of plate nut 4 installation becomes easy since the plate nut 4 may be held inside the main profile whereby one or two threaded fixation elements are used to fixate the plate nut 4 with respect to the main profile. Preferably, the one or two threaded fixation elements are used to engage threaded holes arranged close to the open end of the main profile whereby it is easy to hold the plate nut in place while fastening the threaded fixation elements since the plate nut 4 is more easily accessible when it is arranged closer to the open end. After the plate nut 4 has been retained with one or two threaded fixation elements, the remaining threaded holes may automatically align with corresponding main profile holes allowing these profile holes to be used for retention of the main profile against an auxiliary element.

Notably, using individual nuts for each profile hole (instead of using a plate nut) would be much more cumbersome since each nut must be rotationally retained while the threaded fixation element engages the nut from the outside of the main profile. However, especially for profile holes arranged further from the open end of the main profile, it is difficult to access the inside of the main profile, to retain the nuts.

The plate nut 4 of the present disclosure overcomes these shortcomings by being a single rigid piece featuring two or more threaded holes 41a-41k which rotationally locks each threaded hole and does not require individual retention behind each profile hole.

The plate nut 4 of Fig. 5 further comprises a plurality of protrusions 43a-c extending in the same plane as the plate 45. Protrusions 43a and 43b allow two threaded holes 41a, 41b to be placed offset, relative the longitudinal direction, from the remaining threaded holes 41c-41k. Accordingly, protrusions 43a, 43b may be used to adapt the location of the treaded holes 41a-41k relative to each other. Additionally, the plate comprises a protrusion 43c which e.g. could be used to help retaining a slide block inside the main profile, between the main profile and the inner profile.

Fig. 6 shows the inner side 211a of the first side surface of the main profile 21 where two plate nuts 4a, 4c, the first plate nut 4a and a third plate nut 4c, have been mounted. As seen, each plate nuts 4a, 4c is elongated and extends along the longitudinal direction of the main profile 21 having a plurality of threaded holes 41 distributed along the longitudinal direction. The two plate nuts 4a, 4b are however separated with a separation distance D in a direction transverse to the longitudinal extension. For example, for telescopic drawbars, this separation may enable potential protrusions (e.g. bolt heads or nuts) from the inner profile to pass unhindered between the plate nuts 4a, 4c and/or this separation may allow a slide block to be placed between the plate nuts 4a, 4c.

In Fig. 6 the two separated plate nuts 4a, 4c cooperate to form a space 46 for retaining a slide block. Here, each plate nut 4a, 4c comprises two protrusions 43c, 43d that extend towards each other along the transverse direction. These protrusions 43c, 43d define the space 46 for retaining a slide block that facilitates sliding between an inner profile and the main profile 21. Accordingly, the plate nuts 4a, 4c may not only provide easier installation and enable better load distribution, they may also serve as a retainer for other components that are to be housed between the main profile 21 and inner profile, such as a slide block.

Fig. 7a shows a cross-section of the main profile 21. As seen, this exemplary main profile 21 is substantially rectangular with smooth corners, although other shapes are envisaged as well.

The main profile 21 of Figs. 7a-7c has a first side surface 211, an opposite second side surface 212, as well as a top surface 213 and bottom surface 214 connecting the opposite side surfaces 211, 212.

A plurality of first profile holes 251 are provided extending through the first side surface 211. Similarly, a plurality of second side holes 252 are provided through the second side surface 212. Hereby, a first and second main profile hole configuration is formed through the first and the second side surface 211, 212, respectively.

Each profile hole 251, 252 extends from the outside 211b, 212b of the respective side surface 211, 212 to the inside 211a, 211a of the respective side surface 211, 212. In Fig. 7a two plate nuts 4a, 4b have been arranged against opposite inner sides 211a, 212a of the side surfaces 211, 212 such that the first plate nut hole configuration of the first plate nut 4a matches a main profile hole configuration of the first side surface 211 of the main profile 21 and such that the plate nut hole configuration of the second plate nut 4b matches a main profile hole configuration of the second side surface 212 of the main profile 21. That is, each plate nut 4a, 4b comprises at least two threaded holes 41 and the threaded holes 41 of each plate nut 4a, 4b are arranged to communicate with matching (non-threaded) profile holes 251, 252 provided through each side surface 211, 212. The cross-section of Fig. 7a shows one threaded hole 41 for each plate nut 4a, 4b aligned with a respective profile hole 251, 252 through the main profile 21 but it is understood that each plate nut 4a, 4b extends into and/or out form the plane of Fig. 7a and comprises at least one additional threaded hole aligned with an additional respective profile hole in the main profile 21.

In Fig. 7b two additional plate nuts 4c, 4d, a third plate nut 4c and a fourth plate nut 4d have been provided on the inner side 211b, 212b of each side surface 211, 212, respectively. Hereby, a total of four plate nuts 4a-4d have been provided on the inside of the main profile 21 with each plate nut 4a-d having at least two threaded holes 41 forming a plate nut hole configuration that matches a respective main profile hole configuration. The provision of two separated plate nuts on the first side surface 211 (the first and third plate nut 4a, 4c) and two separated plate nuts on the second opposite side surface 212 (the second and fourth plate nut 4b, 4d) it becomes possible to house e.g. a slide block between the plate nuts 4a, 4c; 4b, 4d of each side surface as shown in Fig. 6.

Turning to Fig. 7c, a plurality of threaded fixation elements 26a-26d are shown threadedly engaging the threaded holes in each plate nut 4a-4d through a respective associated profile hole in the main profile 21. Hereby, it is understood that the threaded fixation elements 26a-26d may be used to mount the main profile 21 to an auxiliary element (not shown) using the threaded fixation elements 26a-26d, by passing the threaded fixation elements 26a-26d first through an auxiliary element hole in the auxiliary element, then through a profile hole and lastly threadedly engaging the threaded hole in the respective plate nut 4a-4d. At the same time, since the plate nuts 4a-4d may be made substantially flat there is enough space inside the main profile 21 to house an inner profile 22 which may slide telescopically relative to the main profile 21 to realize a telescopic drawbar wherein the inner profile 22 may be locked against the main profile 21 in a plurality of positions. Of course, as outlined in connection to Fig. 3 above, it is envisaged that the drawbar is not necessarily telescopic whereby the inner profile 22 may be more permanently locked relative to the main profile 21 using e.g. bolts or welds. Alternatively, the coupling arrangement 23 may be attached to the main profile 21 directly meaning that the inner profile may be omitted entirely.

In some implementations, the threaded elements 26a-26d are used to retain one or more plate nuts 4a-4c inside the main profile 21 without directly interacting with the auxiliary element. For example, each plate nut 4a-4c may be retained in a position where the threaded holes 41 align with the main profile hole configuration using one or two threaded fixation elements whereas at least one further threaded hole 41 remains free to enable retention of the auxiliary element.

Fig. 8 shows an end portion of the main profile 21. For example, this portion may be the open end portion of a drawbar according to some implementations.

A plate nut 4b' is attached to the inner side 212b of the second side surface 212 and another identical plate nut 4a' is attached to the inside of the opposite first side surface 211 of the main profile 21. The plate nut 4b' comprises a plurality of threaded holes which are distributed both in the longitudinal direction and in a direction transverse to the longitudinal axis. Notably, the plate nut 4b' comprises a central aperture configured to hold a slide block 5 as shown in Fig. 8. Hereby, as an alternative to providing two separate plate nuts on the same side surface, wherein each plate nut comprises protrusions that cooperate to hold a slide block as shown in Fig. 6, it is envisaged that a single plate nut 4b' with an appropriately sized aperture may be used to hold the slide block 5 inside the main profile 21. The plate nut 4b' of Fig. 8 is substantially rectangular but it is noted that this shape is merely exemplary and that other shapes are possible. Additionally, the aperture in the plate nut 4b' used for holding the slide block 5 is also rectangular but may be made in any desirable shape to fit the shape of the slide block 5.

Fig. 8 also shows a reinforcing bracket 24 attached to the main profile 21 using threaded elements 26 (e.g. bolts) that retain the reinforcing bracket 24 by threadedly engaging one or more threaded holes of the plate nut(s) 4a', 4b' through the profile holes in the main profile 21. The reinforcing bracket 24 is U-shaped having two sides extending substantially parallel with the first and second side surfaces 211, 212 and a top side, connecting the two sides, wherein the top side extends substantially parallel to the top surface 213. In Fig. 8 the reinforcing bracket is arranged on the outside of the main profile 21 but it is envisaged that it could also be arranged on the inside, in some implementations.

Figs. 9a-9d illustrate exemplifying cross-sections of main profiles 21 of different design, where the main profiles 21 are formed by joining two or more parts. These designs are envisaged alternatives to providing the main profile as a single part (e.g. formed of bent sheet metal) as described above. The two or more parts forming the main profile 21 may be joined to each other using any suitable joining technology, such as welding, bolting or riveting. In Figs. 9a-9d the parts are joined using bolts, but it is understood that the bolts may be replaced with welds or rivets as desired.

In Fig. 9a, two generally U-shaped parts are joined on the inside of the main profile 21 to form the main profile 21. In Fig. 9b, two generally U-shaped parts and two flat parts are joined to form the main profile 21. The parts are joined on the outside of the main profile 21. In Fig. 9c, a generally U-shaped part and a flat part are joined to form the main profile 21. The parts are joined on the outside of the main profile 21. In Fig. 9d a generally U-shaped part and a flat part are joined to form the main profile 21. In Fig. 9d the parts are joined at the top surface of the main profile 21. In Fig. 9e, two generally U-shaped parts of different sizes are joined to form the main profile 21. The parts are joined at a top region of the main profile 21.

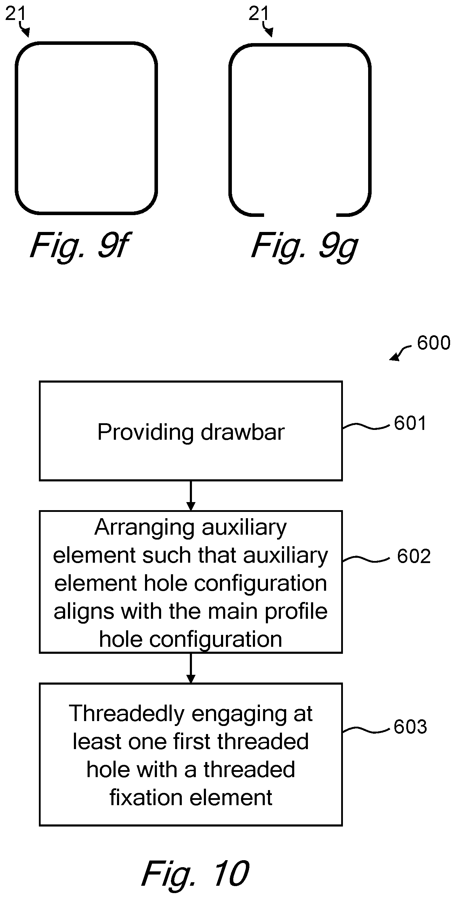

Turning to Fig. 9f a cross-section of a main profile 21 made as a single piece is shown. The main profile 21 may be a cold formed rectangular hollow section. Accordingly, it is envisaged that the main profile 21 may be made as a single piece (as shown in Fig. 9f) or from an aggregate of multiple pieces as exemplified by the embodiments of Figs. 9a-9e. Furthermore, it is noted that the main profile 21 is not necessarily a circumferentially closed profile as shown in Figs. 9a-9f and it is envisaged that one or more slits or apertures may be formed along the longitudinal extension of the main profile 21 as shown in Fig. 9g. Accordingly, the main profile may be circumferentially closed as exemplified by the embodiments of Figs. 9a-9f or circumferentially open, as exemplified by the embodiment of Fig. 9g.

Fig. 10 is a method 600 for manufacturing a drawbar arrangement from a drawbar and an auxiliary element (such as an attachment arrangement for connecting to a chassis frame of a trailer or a dolly or a reinforcing bracket for reinforcing at least a portion of the main profile).

The method 600 comprises step 601 involving providing a drawbar. The drawbar comprises a main profile with a profile hole configuration provided on a first side surface of the main profile and a plate nut having a plate nut hole configuration matching the profile hole configuration arranged on an inside of the first side surface.

The method may then go to step 602 comprising arranging an auxiliary element, such as an attachment arrangement or a reinforcing bracket such that an auxiliary element hole configuration, which matches the main profile hole configuration, aligns with the main profile hole configuration. At this point, it becomes possible to attach the main profile to the auxiliary element using the plate nut and a threaded fixation element.

At step 603 a threaded fixation element (e.g. a bolt) is inserted through an auxiliary element hole, through a profile hole and into threaded engagement with the threaded hole whereby the threaded fixation element attaches the auxiliary element to the main profile.

Step 603 may be repeated two or more times for additional aligned hole triplets formed by the plate nut hole configuration, main profile hole configuration and auxiliary element hole profile. Hereby, the attachment arrangement may be reliantly attached to the main profile using multiple threaded fixation elements.

It is also envisaged that prior to step 602 at least one (and advantageously at least two) threaded fixation elements are inserted through a respective profile hole so as to engage a threaded hole in the plate nut. Hereby at least one threaded fixation element may be used to hold the plate nut in place, prior to attaching the auxiliary element using other threaded holes in the plate nut and aligned profile holes and auxiliary element holes. By attaching first attaching the plate nut to the main profile using a single threaded fixation element it is possible that the plate nut rotates around the single threaded fixation element. Hereby, it is advantageous if two or more fixation elements are used to fixate the plate nut to the main profile so as to rotationally lock the plate nut relative to the main profile.

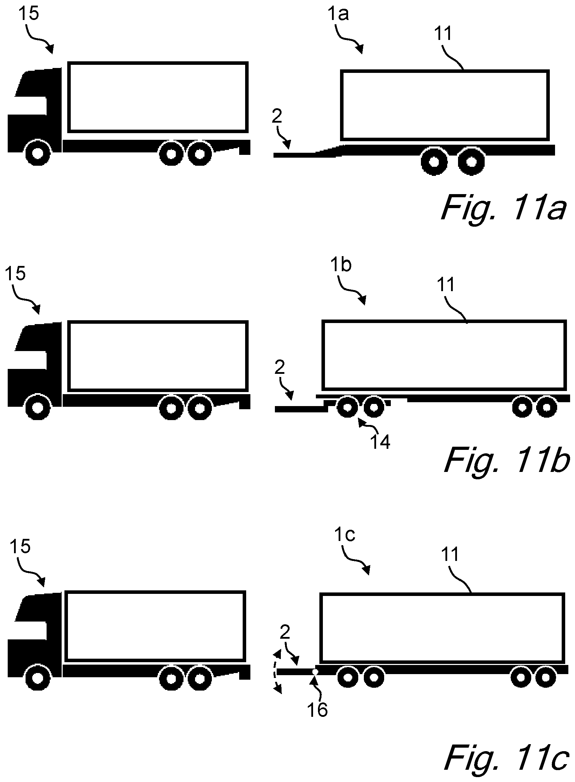

Figs. 11a-11c illustrate various use cases for the telescopic drawbar 2 described herein. Of course, the non-telescopic drawbar may be used in the analogous manner and in the description below the telescopic drawbar 2 may be replaced with the non-telescopic drawbar.

Fig. 11a shows an embodiment wherein the drawbar 2 s used for a center-axel rigid drawbar trailer 1a. In this type of trailer 1a, the drawbar 2 is rigidly attached to the trailer chassis. The towing vehicle 15 may be connected to the drawbar 2 to tow the center-axle rigid drawbar trailer 1a.

In Fig. 11b the drawbar 2 is used for a dolly, configured to be rotationally connected to a trailer 1b. In this embodiment, the drawbar 2 is mounted onto a dolly 14 which in turn is rotatably attached to the trailer 1b. The dolly 14 may have one or more wheel pairs for improving maneuverability. Hereby, the drawbar 2 may be fixated directly to the trailer chassis (se Fig. 11a) or be rotatable relative to the trailer chassis by being connected to a dolly 14 which in turn is connected to the trailer 1b.

As yet another example, the drawbar 2 is pivotably attached to a full trailer 1c as shown in Fig. 11c. The drawbar 2 is in this embodiment attached using a pivoting mechanism 16 allowing the drawbar to pivot along a pivoting axis parallel to the ground plane. The plate nuts and fixation element may in this embodiment be used to mount the drawbar to the pivoting mechanism 16. Hereby, it is not necessary for the drawbar 2 to be rigidly attached to the trailer chassis, it may be pivotably attached.

It will be appreciated that the present inventive concept is not limited to the variants and examples shown. Several modifications and variations are thus conceivable within the scope of the invention which thus is defined by the appended claims.

## Claims

1. A drawbar (2) for a trailer (1) or dolly (14), comprising:
a hollow elongated main profile (21), configured to be arranged substantially parallel to a principal towing direction of the trailer/dolly (1, 14) for pulling the trailer/dolly (1,14), the hollow elongated main profile (21) comprising a first side surface (211) and an opposite second side surface (212), extending over at least a portion of a longitudinal extension of the hollow elongated main profile (21), wherein the first side surface (211) comprises at least two first profile holes (251) forming a first profile hole configuration,
a first plate nut (4a) comprising first threaded holes (41, 41a-41k) forming a first plate nut hole configuration matching the first profile hole configuration, wherein the first plate nut (4a) is arranged on an inner side (211a) of the first side surface (211) such that the first plate nut hole configuration matches the first profile hole configuration,
wherein each of the first threaded holes (41, 41a-41k) are configured to be engaged by a respective threaded fixation element (26, 26a-26d) extending through an associated one of the at least two first profile holes (251).

2. The drawbar (2) according to claim 1, wherein the first plate nut (4a) is integrally formed.

3. The drawbar (2) according to claim 1, wherein the first plate nut (4a) comprises a plate (45), the plate (45) comprising plate holes corresponding to the first plate nut hole configuration, and a threaded member (42a-42g) fixed to the plate (45) at each plate hole and each threaded member (42a-42g) being aligned with an associated plate hole, wherein each threaded member (42a-42g) is configured to be engaged by a respective threaded fixation element (26, 26a-26d).

4. The drawbar (2) according to claim 3, wherein each threaded member (42a-42k) is arranged on an inside of the plate (45).

5. The drawbar (2) according to claim 3 or claim 4, wherein each threaded member (42a-42k) is a press-mounted nut.

6. The drawbar (2) according to any of the preceding claims, wherein the at least two first profile holes (251) are separated along the longitudinal extension of the hollow elongated main profile (21) and/or along a direction transverse to the longitudinal extension of the hollow elongated main profile (21).

7. The drawbar (2) according to any of the preceding claims, wherein the first profile hole configuration comprises at least three first profile holes (251) distributed along the longitudinal extension of the hollow elongated main profile (21), wherein two first profile holes (251) are arranged in a first portion of the hollow elongated main profile (21) and wherein at least one first profile hole (251) is arranged in a second portion of the hollow elongated main profile (21), the second portion being located distally beyond the first portion along the longitudinal extension relative an open end of the hollow elongated main profile (21).

8. The drawbar (2) according to any of the preceding claims, wherein the hollow elongated main profile (21) has a substantially rectangular cross-section and is formed by being bent from sheet metal.

9. The drawbar (2) according to any of the preceding claims, wherein the first plate nut (4a) comprises a recess and/or protrusions (43c, 43d) configured to receive and support a slide block (5).

10. The drawbar (2) according to any of the preceding claims, wherein the drawbar (2) further comprises an inner profile (22) slidingly arranged inside the hollow elongated main profile (21), such that a length of the drawbar (2) is adjustable, wherein the inner profile (22) is configured to be locked in at least two positions relative the hollow elongated main profile (21) and wherein an end portion of the inner profile (22) comprises a coupling arrangement (23) configured to be connected to a towing vehicle, such as a truck.

11. The drawbar (2, 20) according to any of the preceding claim, wherein the second side surface (212) of the main profile comprises at least two second profile holes (252) forming a second profile hole configuration, the drawbar (2) further comprising:
a second plate nut (4b) comprising second threaded holes (41, 41a-41k) forming a second plate nut hole configuration matching the second profile hole configuration,
wherein the second plate nut (4b) is arranged on an inner side (212b) of the second side surface (212) such that the second plate nut hole configuration matches the second profile hole configuration,
wherein each of the second threaded holes (41, 41a-41k) are configured to be engaged by a respective threaded fixation element (26, 26a-d) extending through an associated one of the at least two second profile holes (252).

12. A drawbar arrangement comprising:
the drawbar (2, 20) according to any of the preceding claims,
at least two threaded fixation elements (26, 26a-26d), such as screws or bolts, and
an auxiliary element comprising auxiliary element holes forming an auxiliary element hole configuration matching the first profile hole configuration,
wherein the at least two threaded fixation elements (26, 26a-26d) fixate the auxiliary element in relation to the hollow elongated main profile (21) by threadedly engaging a respective one of the first threaded holes (41, 41a-41k) via an associated one of the first profile holes (251) and an associated one of the auxiliary element holes.

13. The drawbar arrangement according to claim 12, wherein the auxiliary element is included in an attachment arrangement (3a, 3b) for connecting to a chassis frame of a trailer (1) or dolly (14) or a reinforcing bracket (24) for reinforcing at least a portion of the hollow elongated main profile (21).

14. A trailer (1) or dolly (14) comprising a drawbar arrangement according to claim 12 or claim 13.

15. A method (600) for manufacturing a drawbar arrangement, by mounting an auxiliary element to a drawbar (2) according to any of claims 1-11, the method (600) comprising:
arranging (602) an auxiliary element comprising auxiliary element holes forming an auxiliary element hole configuration matching the first profile hole configuration such that the auxiliary element hole configuration aligns with the main profile hole configuration, and
threadedly engaging (603) at least two threaded fixation elements (26, 26a-26d) with a respective first threaded hole (41, 41a-41k) via an associated one of the first profile holes and an associated one of the auxiliary element holes, thereby fixing the auxiliary element in relation to the hollow elongated main profile (21).
